# EUROPEAN PATENT APPLICATION

(11) **EP 1 175 111 A1**
(43) Date of publication of application: **23.01.2002**
(21) Application number: 00306048.0
(22) Date of filing: 17.07.2000
(51) Int. Cl.: H04Q 7/30

(54) **Wireless network communication system and outdoor unit for use in the wireless network communication system**

(71) Applicant: LUCENT TECHNOLOGIES INC., Murray Hill, New Jersey 07974-0636 (US)
(72) Inventor: Jansen, Augustinus Maria, 5271 LG St. Michielsgestel (NL)
(74) Representative: Williams, David John

(57) **Abstract**

Network communication system (10) comprising a computer (13) having a power supply (28) and a data interface (24), an outdoor unit (21) having an antenna (15) and transceiver means (25), for establishing a wireless connection between the computer (13) and further equipment (30). The outdoor unit (21) is connected to the data interface (24) of the computer (13) via a four-wire cable (26), the four-wire cable (26) providing power from the power supply (28) and a data signal from the computer (13) to the outdoor unit (21). The present invention also relates to an outdoor unit (21) for use in a network communication system, the outdoor unit (21) being arranged to receive supply power via a four-wire connector (17) and to transform a data signal received from the four-wire connector (17) into a RF signal to be provided to an antenna (15).

## Description

The present invention relates to a wireless network communication system and an outdoor unit for use in such a network communication system. More specifically, the present invention relates to a network communication system comprising a computer, having a power supply and a data interface and an outdoor unit having an antenna and transceiver means for establishing a wireless connection between the computer and further equipment, the outdoor unit being connected to the computer.

Conventional outdoor wireless communication applications at present consist of an indoor unit with three input/outputs. The indoor unit is connected to a mains power to supply power to the indoor unit, and to a computer, such as a personal computer or a server computer, via a data interface, such as an Ethernet connection. Furthermore, the indoor unit is connected to an outdoor antenna by means of a coaxial cable.

The coaxial cable connecting the indoor unit to the outdoor antenna is costly, and therefore, limits the length of the cable for a certain application. Also, a longer cable shows higher RF power losses, making the system less effective.

A further conventional wireless outdoor application uses a slightly different architecture. In this architecture, the system comprises four components, i.e. a mains supply, an outdoor unit, an indoor combiner unit and a computer. The mains supply supplies the indoor combiner unit with power, which indoor combiner unit is connected to the computer for receiving a data signal from the computer, e.g. by means of an Ethernet connection. The indoor combiner unit combines the data signal and supply power and is furthermore connected to the outdoor unit. The outdoor unit uses the supply power and the data signal to provide an RF signal to an antenna, which is comprised in the outdoor unit. Although this architecture obviates the need for a long coaxial cable between the indoor unit and the outdoor antenna, it still requires a lot of components.

The present invention seeks to provide a network communication system using wireless connection techniques which is a low cost, versatile system.

The present invention provides a network communication system as defined in the preamble above, in which the outdoor unit is connected to the data interface of the computer via a four-wire cable, the four-wire cable providing power from the power supply and a data signal from the computer to the outdoor unit. The computer may be a personal computer or a host server computer.

The outdoor unit may be installed outdoors, or can alternatively be used indoors in the same enclosed area as were the network communication system is positioned to provide a wireless connection over a short distance indoors.

Alternatively, the outdoor unit may be installed inside a building, e.g. behind a window glass or another wall which transmits electromagnetic fields, to provide a wireless connection between the computer, which may be positioned inside the building, and a further system, such as a subscriber computer which may be positioned outside the building

A network communication system according to the present invention provides a flexible system which may easily be adapted for a number of different applications. By limiting the number of additional components needed, the system is relatively low-cost.

In a further embodiment the data interface is a USB interface and the four-wire cable is a USB cable. Modern day computers are already equipped with a USB interface, and therefore, no adaptations of the computer are necessary for use in the present network communication system.

The data interface, preferably a USB interface, and the outdoor unit may be arranged for high speed communication (e.g., 500 kbit/s - 10 Mbit/s), low speed communication (e.g., 10 - 100 kbit/s) or they may be arranged for switching between the high speed and low speed communication. The USB standard supports these kind of communication speeds. The various communication speeds allow the communication with a large variety of peripheral equipment, such as another (client) computer.

Preferably, the outdoor unit provides wireless communication according to a predetermined standard, such as the IEEE 802.11 wireless LAN standard for data communication up to 11 Mbit/s. Such a standard of wireless communication allows use of standard components for the outdoor unit, and for the use of standard peripheral equipment.

In a further preferred embodiment, the computer is connected to the Internet via a second data interface, the system further comprising at least one subscriber computer having a wireless communication device for wireless communication with the outdoor unit. Such an arrangement allows a low cost Internet service, in which the computer is a host server computer of an Internet Service Provider (ISP) providing Internet access to a large number of subscriber computers via the wireless connection. The ISP server computer may than be located at a central site, able to service a large number of subscriber computers in locations situated around the central site.

In a further aspect, the present invention relates to an outdoor unit for use in a network communication system, the outdoor unit comprising an antenna and a four-wire connector, the outdoor unit being arranged to receive supply power via the four-wire connector and to transform a data signal received from the four-wire connector into a RF signal to be provided to the antenna. Preferably, the data signal is a USB signal and the four-wire connector is a USB connector. Such an outdoor unit may be used to provide wireless communication in a variety of applications, such as the wireless network communication system mentioned above.

Preferably, the outdoor unit is arranged for high speed communication (e.g. 500 kbit/s - 10 Mbit/s), low speed communication (10 - 100 kbit/s) or is arranged for switching between the high speed and low speed communication. This allows a number of peripheral equipment, such as the computer mentioned in the network communication system above, to be interfaced to the outdoor unit.

In a further embodiment, the outdoor unit provides wireless communication according to a predetermined standard, such as the IEEE 802.11 wireless LAN standard. This allows the use of available components in the outdoor unit.

The present invention will now be discussed in more detail by describing a preferred embodiment by reference to the accompanying drawings, in which
Fig. 1a shows a schematic diagram of a first known wireless communication system;
Fig. 1b shows a schematic diagram of a second known wireless communication system; and
Fig. 2 shows a schematic diagram of an embodiment of the wireless network communication system according to the present invention.

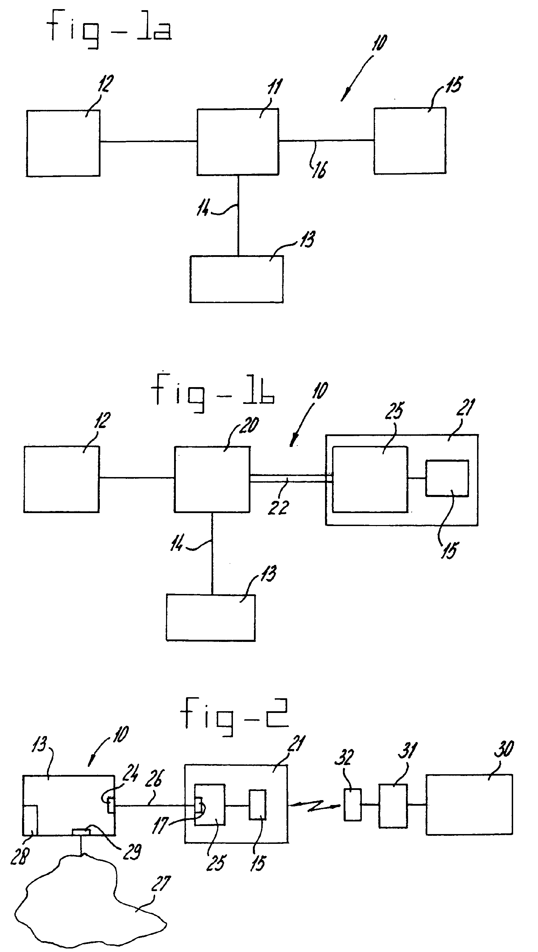

Fig. 1a shows a schematic diagram of a conventional wireless outdoor communication system 10. The indoor unit 11 is provided with three input/outputs. The indoor unit 11 is connected to a mains supply 12 for receiving supply power. The indoor unit 11 is also connected to a computer 13, such as a personal computer or a server computer, via a data interface connection 14, such as an Ethernet connection. Finally, the indoor unit 11 is connected to an outdoor antenna 15 by means of a coaxial cable 16. The indoor unit 11 transforms the digital signal received from the computer 13 into an RF signal suited for transmission by the outdoor antenna 15. It also transforms the RF signal received by the outdoor antenna 15 into a digital signal for the computer 13.

A communication system 10 as described may be used to connect a number of terminals to the computer 13 via a wireless connection. The terminals will then be equipped with a transceiver module compatible with the RF transmission of the communication system 10.

A disadvantage of this system is that the outdoor part of the system 10 comprises the antenna 15 and the coaxial cable 16. The coaxial cable 16 should be of high quality and thus high cost. The cost of the total system will thus increase when the length of the coaxial cable 16 increases. The length of the coaxial cable 16 also influences the system performance, as a longer coaxial cable will result in higher RF losses.

In an alternative architecture, as shown in Fig. 1b, the need for a (long) coaxial cable 16 is obviated. For this, the computer 13 and mains supply 12 are connected to an indoor interface unit 20. The indoor interface unit 20 combines the power and data signal, and is connected to an outdoor unit 21 via a plurality of cables 22. The outdoor unit 21 comprises transceiver means 25 for transforming the data signal into an RF signal to be transmitted by an outdoor antenna 15, or for transforming the RF signal received by the outdoor antenna 15 into a data signal to be received by the computer 13. Although this alternative arrangement reduces the cost and enhances the performance of the system 10 by eliminating the need for a (long) coaxial cable 16, it still requires a lot of hardware and interconnect cables.

According to the present invention a network communication system is provided as shown in Fig. 2. The system 10 comprises a computer 13, such as a personal computer or server computer. The computer 13 is preferably provided with a Universal Serial Bus (USB) interface 24. The system further comprises an outdoor unit 21, which is connected to the computer by a four-wire cable 26, such as a USB cable. Two of the wires of the four-wire cable 26 are used for providing supply power to the outdoor unit 21, and two further wires are used for data signal transfer between the computer 13 and the outdoor unit 21.

The outdoor unit 21 can, of course, also be used indoors in the same enclosed area as were the network communication system is positioned to provide a wireless connection over a short distance indoors.

Alternatively, the outdoor unit 21 may be installed inside a building, e.g. behind a window glass or another wall which transmits electromagnetic fields, to provide a wireless connection between the computer 13, which may be positioned inside the building, and a further system, such as a subscriber computer 30 shown in Fig. 2., which may be positioned outside the building.

The outdoor unit 21 transforms the data signal into an RF signal to be transmitted by an outdoor antenna 15, or transforms the RF signal received by the outdoor antenna 15 into a data signal to be received by the computer 13. Preferably, the wireless communication provided by the network communication system 10 adheres to the IEEE 802 family of wireless transmission standards (such as the IEEE 802.11 wireless standard providing 11 Mbit/s data transfer).

The network communication system according to the embodiment of the present invention as described above provides a simple and economic solution for providing wireless communication. Less components are needed (present day computers are equipped with standard USB interfaces) and the need for long (and expensive) coaxial cables is obviated.

The USB interface is normally used with computers for indoor applications. A USB cable supports data exchange between a host computer, such as computer 13, and a wide range of simultaneously accessible peripherals. The peripherals share the bandwidth of the USB interface through a host scheduled token-based protocol. The USB allows peripherals to be attached, used and detached while the host and other peripherals are in operation ('hot plug-unplug').

According to the USB standard, signal and power are transferred over a four-wire cable. Signalling occurs over two wires on each point-to-point segment. The other two wires or conductors are used to supply a maximum of 2.5 W of DC power to a peripheral component. The standard USB comprises 12 Mbit/s full-speed bit rate, but lower bit rates are also supported. Typically, medium-speed (500 kbit/s-10 Mbit/s) data ranges are isochronous and are used for multiple peripherals with a guaranteed latency. Applications for the medium-speed data ranges are e.g. voice, audio, compressed video, ISDN, PBX, POTS. The low-speed data ranges (10 - 100 kbit/s) are typically used for a limited number of interactive devices, such as keyboard, mouse, game peripherals, virtual reality peripherals and other desktop peripherals. The clock signal is transmitted over the USB connection encoded with the differential data signal. Although specifically suitable for computer desktop environments, it is also possible to use USB for other applications, such as the mobile environment using wireless communications.

Using the low-speed data rates of the USB standard requires less protection against electromagnetic interference (EMI). Both data rate ranges may be supported in the same USB connection by automatic dynamic mode switching between transfers of data.

In a preferred embodiment of the network communication system 10 according to the present invention, the computer 13 is further provided with a connection to the Internet 27, and may be a server computer of an Internet service provider (ISP). The network communication system 10 can than be used to connect a large number of subscriber computers 30 (one of which is shown in Fig. 2) to the ISP server computer 13 by means of a suitable transceiver 31 and antenna 32 connected to the subscriber computer 30. In this case, the ISP computer 13 communicates with the outdoor unit 21 using the two data wires of the USB connection 26 with a high speed data rate (up to 11 Mbit/s) or a low speed data rate (1.5 Mbit/s). It is even possible for the ISP to arrange the network communication system 10, such that the data rate is limited to a data rate of 128 kbit/s. This allows communication between a subscriber computer 30 and the ISP computer 13 with still more than twice the data rate of the presently fastest modem (56 kbit/s) or equal to a double ISDN connection. This embodiment of the present invention allows a low cost solution for the home market, in which a number of subscribers can be served in homes around a central site where the antenna 15 is located.

## Claims

1. Network communication system (10) comprising
a computer (13) having a power supply (28) and a data interface (24);
an outdoor unit (21), having an antenna (15) and transceiver means (25), for establishing a wireless connection between the computer (13) and further equipment (30), the outdoor unit (21) being connected to the computer (13);
**characterised in that**,
the outdoor unit (21) is connected to the data interface (24) of the computer (13) via a four-wire cable (26), the four-wire cable (26) providing power from the power supply (28) and a data signal from the computer (13) to the outdoor unit (21).

2. Network communication system according to claim 1, in which the data interface (24) is a USB interface and the four-wire cable (26) is a USB cable.

3. Network communication system according to claim 1 or 2, in which the data interface (24) and the outdoor unit (21) are arranged for high speed communication.

4. Network communication system according to claim 1 or 2, in which the data interface (24) and the outdoor unit (21) are arranged for low speed communication.

5. Network communication system according to claim 1 or 2, in which the data interface (24) and the outdoor unit (21) are arranged for switching between high speed and low speed communication.

6. Network communication system according to one of the preceding claims, in which the outdoor unit (21) provides wireless communication according to a predetermined standard, such as IEEE 802.11.

7. Network communication system according to one of the preceding claims, in which the computer (13) is connected to the Internet (27) via a second data interface (29), the system (10) further comprising at least one subscriber computer (30) having a wireless communication device (31, 32) for wireless communication with the outdoor unit (21).

8. Outdoor unit for use in a network communication system, the outdoor unit (21) comprising an antenna (15) and a four-wire connector (17), the outdoor unit (21) being arranged to receive supply power via the four-wire connector (17) and to transform a data signal received from the four-wire connector (17) into a RF signal to be provided to the antenna (15).

9. Outdoor unit according to claim 8, in which the data signal is a USB signal and the four-wire connector (17) is a USB connector.

10. Outdoor unit according to claim 8 or 9, in which the outdoor unit (21) is arranged for high speed communication.

11. Outdoor unit according to claim 8 or 9, in which the outdoor unit (21) is arranged for low speed communication.

12. Outdoor unit according to claim 8 or 9, in which the outdoor unit (21) is arranged for switching between high speed and low speed communication.

13. Outdoor unit according to one of the claims 8 through 12, in which the outdoor unit (21) provides wireless communication according to a predetermined standard, such as IEEE 802.11.
